**Europäisches Patentamt**

**European Patent Office**

**Office européen des brevets**

(11) Veröffentlichungsnummer: **0 222 175**
**B1**

(12) **EUROPÄISCHE PATENTSCHRIFT**

(45) Veröffentlichungstag der Patentschrift:
**23.11.88**

(21) Anmeldenummer: **86114076.2**

(22) Anmeldetag: **10.10.86**

(51) Int. Cl.⁴: **B 67 C 3/24,** B 65 B 43/54

(54) Trägerelement zum Aufnehmen eines Behälters.

(30) Priorität: **18.10.85 DE 3537137**

(43) Veröffentlichungstag der Anmeldung:
**20.05.87 Patentblatt 87/21**

(45) Bekanntmachung des Hinweises auf die Patenterteilung:
**23.11.88 Patentblatt 88/47**

(84) Benannte Vertragsstaaten:
**AT BE CH DE FR GB IT LI NL**

(56) Entgegenhaltungen:
DE-A-3 322 596
FR-A-2 185 220

(73) Patentinhaber: **Henkel Kommanditgesellschaft auf Aktien, Postfach 1100 Henkelstrasse 67, D-4000 Düsseldorf- Holthausen (DE)**

(72) Erfinder: **Gierlichs, Ulrich, Spreestrasse 68, D-5650 Solingen 11 (DE)**
Erfinder: **Giesen, Walter, Bachstrasse 156, D-5657 Haan (DE)**

### Beschreibung

Die Erfindung betrifft ein Trägerelement zum Aufnehmen eines Behälters beim Durchlaufen einer Abfüll- und/oder Verpackungsanlage. Ein derartiges Trägerelement ist aus der Offenlegungsschrift DE-A-3 322 596 bekannt.

In Abfüllanlagen werden Behälter, wie Flaschen oder Kanister, aus Glas, Kunststoff, Metall oder Pappe weitgehend automatisch mit dem jeweils vorgesehenen Inhalt, der beispielsweise flüssig oder körnig sein kann, gefüllt. Die Anlagen enthalten zum automatischen Transport der Behälter vorgesehene Führungsgeländer, Schnecken, Transportsterne, Transportketten, Plattenbandketten, Mitnehmerketten oder dergleichen. Ähnlich aufwendige und belastbare Einrichtungen werden in Verpackungsanlagen zum Transport und Weiterleiten der Behältnisse eingesetzt. Die Anlagen werden daher zum wahlweisen Füllen und Verpacken von Behälter verschiedenster Art und Größe ausgelegt. Trotzdem erforder der Wechsel von einem zum anderen Behältertyp erhebliche Umrüstungen. Unpassende Behälterformen führen zu Beschädigungen der Behälter und/oder der Abfüll- bzw. Verpackungsanlagen. Außerdem ist erheblicher Lärm durch aneinanderschlagende Teile in Kauf zu nehmen.

Der Erfindung liegt die Aufgabe zugrunde, ein Trägerelement zu schaffen, das gewissermaßen wie ein Adapter oder wie eine Palette auf der Außensete der Form der jeweiligen Abfüll- bzw. Verpackungsanlage angepaßt ist und auf der Innenseite so ausgestaltet ist, daß es zur Aufnahme einer möglichst großen Vielzahl von Formen und Typen von zu füllenden, zu dekorierenden, zu etikettierenden, zu markierenden oder zu codierenden Behälter geeignet ist. Die erfindungsgemäße Lösung ist für das eingangs genannte Trägerelemet gekennzeichnet durch einen den Boden eines einzusetzenden Behälters im wesentlichen längs Linien und/oder an Punkten berührenden Bodenring mit an zwei diametral gegenüberliegenden und in Laufrichtung der Anlage hintereinander anzuordnenden Ringteilstücken angeformten, etwa senkrecht zur Ringebene stehenden Schilden. Verbesserungen, weitere Ausgestaltungen der Erfindung werden in den Unteransprüchen beschrieben.

Der erfindungsgemäße adapterartige Behältnisträger kann aus einem stabilen Verschleißfesten, geräuschdämpfenden und widerstandfähigen Material, vorzugsweise aus einem im Spritzgußverfahren zu verarbeitenden Kunststoff hergestellt werden, so daß er durch äußere und innere Belastungen bzw. Beanspruchungen nicht zu verformen ist. Zugleich kann seine Form so gewählt werden, daß die Außenkonturen einfach und für alle Einsatzteile gleich sowie für den Transport durch die jeweilige Abfüllanlage unter Berücksichtigung der spezifischen Eigenschaften von Führungsgeländern, Schnecken, Transportsternen und Transportketten in allen Dimensionen auszulegen sind. Die Abmessungen sollen den maximalen Formaten der jeweiligen Abfüllanlage entsprechen, bei Verwendung als Behälter- bzw. Flaschenträger muß also das maximale Behältnisformat kleiner sein als der maximale Formatdurchlaß der Abfüllanlage.

Auch die Innenkontur der erfindungsgemäßen als Adapter wirkenden Trägerelemente läßt sich ohne Schwierigkeiten den jeweiligen Bedürfnissen der einzelnen Behälter nach Behälterlänge, -dicke, -höhe und -form sowie Lage eines Behältergriffs, der Behältermündung oder der Position von Etiketten anpassen. Darüber hinaus kann die Innenkontur vorzugsweise so gestaltet werden, daß auch Behältnisse mit außermittiger Mündung beliebig rechts- oder linksseitig in den Adapter einzustellen sind. Das Trägerelement wird insbesondere bei Anwendung als Flaschenbehälter nach oben hin offen gestaltet, damit die Flaschen von oben her einzusetzen sind. Auch können - in Laufrichtung gesehen - an den Seitenflächen Aussparungen vorgesehen werden, um die üblichen Manipuationen an Flaschen und dergleichen, wie die thermische Vorbehandlung, das Dekorieren, Etikettieren, Markieren und Codieren ausführen zu können.

Schließlich soll das erfindungsgemäße Trägerelement an der Unterseite so gestaltet werden, daß die hineingestellten Behältnisse ringsherum mit keinerlei Teilen der in Abfüll- oder Verpackungsanlagen verwendeten Transportvorrichtungen wie Plattenbandketten, Transportschnecken, Transportsternen oder Mitnehmerketten in Berührung kommen. Damit wird zugleich vermieden, daß die in die Trägerelemente eingesetzten Behälter bei Normal- und Störbetrieb belastet oder deformiert werden bzw. durch gegenseitige Berührung Lärm verursachen. Die erfindungsgemäßen Trägerelemente wirken daher auch schalldämmend. Schließlich werden die durch die jeweilige Anlage durchzuschleusenden Behälter durch die Trägerelemente derart geschützt, daß die Einsatzgewichte der Behälter entsprechend zu vermindern sind, da Beschädigungen in der jeweiligen Anlage nicht zu befürchten sind.

Anhand der schematischen Darstellung eines Ausführungsbeispiels werden Einzelheiten der Erfindung erläutert.

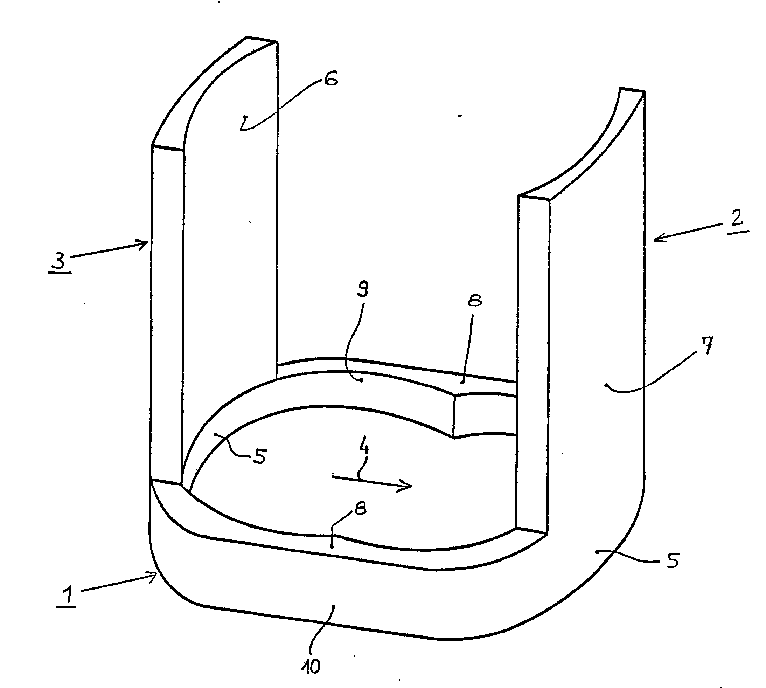

Das in der beiliegenden Zeichnung dargestellte Ausführungsbeispiel eines erfindungsgemäßen Trägerelements besteht aus einem insgesamt mit 1 bezeichneten Bodenring und zwei daran angeformten Schilden, nämlich einem Vorderschild 2 und einem Hinterschild 3. Die Schilde 2 und 3 werden an zwei diametral gegenüberliegende und in Laufrichtung 4 der Anlage hintereinander anzuordnende Ringteilstücke 5 so angeformt, daß sie etwa senkrecht zur Ringebene stehen. In den durch die Innenfläche 6 der Schilde 2 und 3 einerseits und den Bodenring 1 andererseits aufgespannten Raum ist der jeweilige Behälter beim Durchlaufen einer Abfüll- und/oder Verpackungsanlage einzusetzen.

Die Außenkontur des Trägerelements wird der jeweiligen Anlage angepaßt, während die Innenkontur so auszugestalten ist, daß sie zur Aufnahme möglichst aller jeweils in Frage kommenden Behälterformen und -typen geeignet ist. Um die Adapterwirkung zu unterstützen, werden die Vorder- und Hinterschilde 2 und 3 auf ihrer dem einzusetzenden Behälter zugewendeten Innenseite 6 mit einer konkaven Zylinderwölbung ausgestattet. Dürch die Form der Schilde wird eingesetzten Behältern ein gewisser seitlicher Halt gegeben.

Für das Hindurchführen durch die jeweilige Anlage ist es ferner günstig, wenn die Schilde 2 und 3 auf ihrer dem einzusetzenden Behälter abgewendeten Außenseite 7 eine konvexe Zylinderwölbung besitzen, durch die ein glattes Hindurchgehen durch die Anlage erleichtert wird. Die Wölbung auf der Außenseite 7 soll im übrigen einen wesentlich größeren Krümmungsradius als die Wölbung auf der Innenseite 6 besitzen. Der kleinere Krümmungsradius der Wölbung auf der Innenseite 6 bewirkt einen verbesserten seitlichen Halt eines eingesetzten Behälters. Der größere Außen-Krümmungsradius dient der Materialverstärkung an den senkrechten Schildrändern.

Schließlich ist es für einen glatten Durchgang durch die jeweilige Anlage günstig, wenn der Bodenring 1 auf seiner Außenseite stetig gerundet ausgebildet wird. Dem gegenüber soll der Bodenring 1 auf seiner Innenseite an zwei diametral gegenüberliegenden und quer zur Laufrichtung 4 der Anlage anzuordnenden Ringteilstücken 8 in das Ringinnere hinein zugespitzt werden. Hierdurch ergibt sich eine gute Auflage für einen einzusetzenden Behälter. Es wird zugleich eine gute Statik erhalten, wenn die Innenseiten des Bodenrings 1 aus zwei in der Laufrichtung 4 hintereinander anzuordnenden und sich um weniger als die Hälfte überschneidenden Kreisen 9 oder dergleichen gebildet werden. In dem Bereich, in dem sich die Kreise überschneiden, entstehen dann die in das Ringinnere hinein zugespitzten Ringteilstücke 8, während der Ring im übrigen auf der Innenseite glatt gerundet ist und den Forderungen der Statik entspricht. Die nach innen zugespitzten Teilstücke 8 bieten eine gute Auflage für relativ kleine Behälter, im übrigen ist die große Ausnehmung des Bodenrings 1 günstig für Behandlungen, Beschriftungen oder Verzierungen des Behälterbodens.

Um zu erreichen, daß der Bodenring 1 eine stetig gerundete Form auch bei länglicher Ausbildung besitzt, wird die Außenkontur des Bodenrings 1 aus in der Laufrichtung 4 vorne und hinten anzuordnenden, konvex gerundeten Ringteilstücken 5 einerseits und parallel zur Laufrichtung 4 anzuordnenden in etwa geraden Ringteilstücken 10 an den Ringseiten zusammengesetzt. Eine solche Form wird erhalten, wenn die Außenkontur ebenso wie die Innenkontur des Bodenrings 1 in etwa aus zwei in der Laufrichtung hintereinander anzuordnenden und sich um weniger als die Hälfte überschneidenden Kreisen, Ellipsen oder dergleichen mit Ausgleich der an den Ringseitenbereichen 10 eingezogenen Teilstücke durch daran angesetzte Tangenten gebildet werden. Die geraden Kanten an den Längsseiten sind in allen Fällen vorteilhaft für eine definierte Führung des Trägerelementes in der jeweiligen Anlage.

## Patentansprüche

1. Trägerelement zum Aufnehmen eines Behälters bei Durchlaufen einer Abfüll- und/oder Verpackungsanlage, gekennzeichnet durch einen den Boden eines einzusetzenden Behälters im wesentlichen nur längs Linien und/oder Punkten berührenden Bodenring (1) mit an zwei diametral gegenüberliegenden und in Laufrichtung (4) der Anlage hintereinander anzuordnenden Ringteilstücken (5) angeformten, etwa senkrecht zur Ringebene stehenden Schilden (2, 3).

2. Trägerelement nach Anspruch 1, dadurch gekennzeichnet, daß die Schilde (2, 3) auf ihrer dem einzusetzenden Behälter zugewendeten Innenseite (6) eine konkave Zylinderwölbung besitzen.

3. Trägerelement nach Anspruch 1 oder 2, dadurch gekennzeichnet, daß die Schilde (2, 3) an ihrer von dem einzusetzenden Behälter abgewendeten Außenseite (7) eine konvexe Zylinderwölbung besitzen.

4. Trägerelement nach Anspruch 2 und 3, dadurch gekennzeichnet, daß die Wölbung an der Außenseite (7) einen wesentlich größeren Krümmungsradius als die Wölbung auf der Innenseite (6) besitzt.

5. Trägerelement nach einem oder mehreren der Ansprüche 1 bis 4, dadurch gekennzeichnet, daß der Bodenring (1) an seiner Außenseite stetig gerundet ist.

6. Trägerelement nach einem oder mehreren der Ansprüche 1 bis 5, dadurch gekennzeichnet, daß der Bodenring (1) auf seiner Innenseite an zwei diametral gegenüberliegenden und quer zur Laufrichtung (4) der Anlage anzuordnenden Ringteilstücken (8) in das Ringinnere hinein zugespitzt ist.

7. Trägerelement nach Anspruch 6, dadurch gekennzeichnet, daß die Innenseite des Bodenrings (1) aus zwei in der Laufrichtung (4) hintereinander anzuordnenden und sich um weniger als die Hälfte überschneidenden Kreisen (9), Ellipsen oder dergleichen gebildet ist.

8. Trägerelement nach einem oder mehreren der Ansprüche 1 bis 7, dadurch gekennzeichnet, daß die Außenkontur des Bodenrings (1) aus in der Laufrichtung (4) vorne und hinten anzuordnenden, konvex gerundeten Bereichen (5) und parallel zur Laufrichtung (4) anzuordnenden, in etwa geraden Bereichen (10) an den Ringseiten besteht.

9. Trägerelement nach Anspruch 8, dadurch gekennzeichnet, daß die Außenkontur des Bodenrings (1) in etwa aus zwei in der Laufrichtung (4) hintereinander anzuordnenden und sich um weniger als die Hälfte überschneidenden Kreisen, Ellipsen oder dergleichen mit Ausgleich der an deren Längsseiten einbezogenen Teilstücken durch daran angesetzte Tangenten (10) gebildet ist.

**Claims**

1. Carrier element for the reception of a container while running through a filling and/or packaging plant, characterised by a base ring (1), which touches the base of a container to be inserted substantially only along lines and/or points, with shields (2, 3), which stand about perpendicularly to the plane of the ring and are shaped on at two diametrally opposite partial ring members (5) to be arranged one behind the other in running direction (4) of the plant.

2. Carrier element according to claim 1, characterised thereby, that the shields (2, 3) possess a concave cylindrical curvature on their inward side (6) facing the container to be inserted.

3. Carrier element according to claim 1 or 2, characterised thereby, that the shields (2, 3) possess a convex cylindrical curvature on their outward side (7) facing away from the container to be inserted.

4. Carrier element according to claim 2 and 3, characterised thereby, that the curvature at the outward side (7) has a substantially greater radius of curvature than the curvature at the inwards side (6).

5. Carrier element according to one or more of the claims 1 to 4, characterised thereby, that the base ring (1) is steadily rounded at its outward side.

6. Carrier element according to one or more of the claims 1 to 5, characterised thereby, that the base ring (1) is pointed at its inward side into the interior of the ring at two diametrally opposite partial ring members (5) to be aranged transversely to the running direction (4) of the plant.

7. Carrier element according to claim 6, characterised thereby, that the inward side of the base ring (1) is formed of two circels (9), ellipses or the like, wich overlap by less than half and are to be arranged one behind the other in the running direction (4).

8. Carrier element according to one or more of the claims 1 to 7, characterised thereby, that the external outline of the base ring (1) consists of convexly rounded regions (5) to be arranged forwardly and rearwardly in the running direction (4) and about straight regions (10), which are to be arranged parallelly to the running direction (4), at the sides of the ring.

9. Carrier element according to claim 8, characterised thereby, that the external outline of the base ring (1) is formed approximately of two circles) ellipses or the like, which overlap by less than half and are to be arranged one behind the other in the running direction (4) with adjustment of the partial pieces included at their longitudinal sides by tangents (10) placed on thereat.

**Revendications**

1. Elément porteur pour recevoir un récipient par traversée d'une installation de soutirage et/ou d'emballage, caractérisé en ce qu'un anneau de fond (1) - tangent au fond d'un récipient à mettre en place essentiellement seulement le long de lignes et/ou de points, formés de deux panneaux (2, 3) placés à peu près perpendiculairement au plan de l'anneau sur deux sections d'anneau (5) à disposer l'une derrière l'autre opposées diamétralement, et dans le sens du fonctionnement (4) de l'installation.

2. Elément porteur selon la revendication 1, caractérisé en ce que les panneaux (2, 3) possèdent une cambrure de cylindre concave sur leur face interne (6) qui se tourne vers le récipient à mettre en place.

3. Elément porteur selon les revendications 1 ou 2, caractérisé en ce que les panneaux (2, 3) possèdent une cambrure de cylindre convexe sur leur face externe (7) qui se détourne du récipient qui est à mettre en place.

4. Elément porteur selon les revendications 2 et 3, caractérisé en ce que la cambrure sur la face externe (7) possède un rayon de courbure essentiellement plus grand que la cambrure de la face interne (6).

5. Elément porteur selon une ou plusieurs des revendications 1 à 4, caractérisé en ce que l'anneau de fond (1) est arrondi d'une manière constante sur sa face externe.

6. Elément porteur selon une ou plusieurs des revendications 1 à 5, caractérisé en ce que l'anneau de fond (1) est pointu au dedans de l'intérieur de l'anneau, sur sa face intérieure sur deux sections d'anneaux à disposer opposées diamétralement et transversalement vers la direction de marche (4) de l'installation.

7. Elément porteur selon la revendication 6, caractérisé en ce que la face interne de l'anneau de fond (1) est formée de deux cercles se recouvrant d'au moins la moitié et disposés l'un derrière l'autre dans le sens de la marche (4), d'ellipses ou similaires.

8. Elément porteur selon une ou plusieurs des revendications 1 à 7, caractérisé en ce que le contour extérieur de l'anneau de fond (1) consiste en des zones arrondies convexes à disposer dans le sens de la marche en avant et en arrière, et

**0 222 175**

parallèlement à la direction de la marche (4) à disposer en zones (10) à peu près droites sur les faces de l'anneau.

9. Elément porteur selon la revendication 8, caractérisé en ce que le contour extérieur de l'anneau de fond (1) est formé en sa base de deux cercles, ellipses ou similaires à disposer l'un derrière l'autre dans la direction de la marche (4) et se recouvrant d'au moins la moitié avec équilibre des sections inversées sur leurs faces longitudinales au moyen des tangentes (10) appliquées la dessus.